(19) Europäisches Patentamt
European Patent Office
Office européen des brevets

(11) Numéro de publication : **0 329 550 B1**


# (12) FASCICULE DE BREVET EUROPEEN


(45) Date de publication du fascicule du brevet : **09.10.91 Bulletin 91/41**

(51) Int. Cl.[5] : **B60Q 1/04**

(21) Numéro de dépôt : **89400418.3**

(22) Date de dépôt : **15.02.89**


**(54) Système de fixation et de réglage d'un dispositif lumineux, plus particulièrement d'un projecteur, notamment pour véhicule automobile.**


(30) Priorité : **19.02.88 FR 8801983**

(43) Date de publication de la demande : **23.08.89 Bulletin 89/34**

(45) Mention de la délivrance du brevet : **09.10.91 Bulletin 91/41**

(84) Etats contractants désignés : **DE ES GB IT**

(56) Documents cités : **US-A- 4 722 033**



(73) Titulaire : **VALEO VISION**
**17, rue Henri Gautier**
**F-93012 Bobigny Cédex (FR)**

(72) Inventeur : **Philippe, Eric**
**34, rue Schnapper**
**F-78100 Saint Germaine en Laye (FR)**

(74) Mandataire : **Lemaire, Marc**
**VALEO Département Propriété Industrielle 30, rue Blanqui**
**F-93406 Saint-Ouen (FR)**


EP 0 329 550 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un système de fixation et de réglage d'un dispositif lumineux, plus particulièrement d'un projecteur, notamment pour véhicule automobile.

Les projecteurs pour véhicules automobiles comprennent un réflecteur ouvert sur sa partie frontale et apte à recevoir une glace de fermeture pour définir un espace intérieur clos du réflecteur, à l'intérieur duquel est disposée une source lumineuse, dont les rayons sont réfléchis par le réflecteur et répartis par la glace de fermeture. Dans certains cas, le réflecteur est disposé à l'intérieur d'un boîtier, sur l'ouverture frontale duquel est fixée une glace de fermeture.

Dans ces deux cas, le projecteur est équipé d'un système de réglage du faisceau lumineux qui s'effectue en faisant pivoter légèrement le réflecteur par rapport à la carrosserie du véhicule ou par rapport au boîtier à l'intérieur duquel est logé le réflecteur.

Le brevet DE-A-2743745 concerne un système de fixation et de réglage d'un projecteur pour véhicule automobile comprenant un support constitué d'une lame ressort fixée au réflecteur et dont l'extrémité libre élastique comporte une lumière permettant son coulissement par rapport à un chariot en appui élastique sur un élément de carrosserie et dans lequel est vissée une vis de réglage solidaire en translation de la lame ressort, d'où du réflecteur.

Selon une caractéristique du brevet précité, la lame ressort est fixée sur le réflecteur, grâce à des rivets. Cela a l'inconvénient d'altérer la qualité du faisceau lumineux du projecteur par les têtes de rivets qui apparaissent sur la surface réfléchissante du réflecteur.

La présente invention propose un système de fixation et de réglage démontable et n'altérant pas la qualité du faisceau lumineux.

A cet effet, la présente invention concerne un système de fixation et de réglage d'un dispositif lumineux, plus particulièrement d'un projecteur, notamment pour véhicule automobile, du type comportant un support fixé au dispositif lumineux, et sur lequel est montée libre en rotation, une vis de réglage qui entraîne ledit support en translation par rapport à un chariot fixe en appui élastique contre un élément de carrosserie, caractérisé en ce que le support est constitué d'une plaque comportant au moins une lumière apte à s'engager sur un point d'ancrage correspondant solidaire du dispositif lumineux, et en ce qu'au moins une languette de verrouillage immobilise la plaque support en s'insérant entre un bras de la plaque support et un étrier du dispositif lumineux dans lequel est logé ledit bras.

La description qui va suivre en regard des dessins annexés, fera mieux comprendre comment l'invention peut être réalisée, dessins selon lesquels:

— La figure 1 représente, en élévation, un projecteur muni d'un système, selon l'invention.

— La figure 2 représente, à plus grande échelle, une section II-II de la figure 1.

— La figure 3 représente, à plus grande échelle, une section III-III de la figure 1.

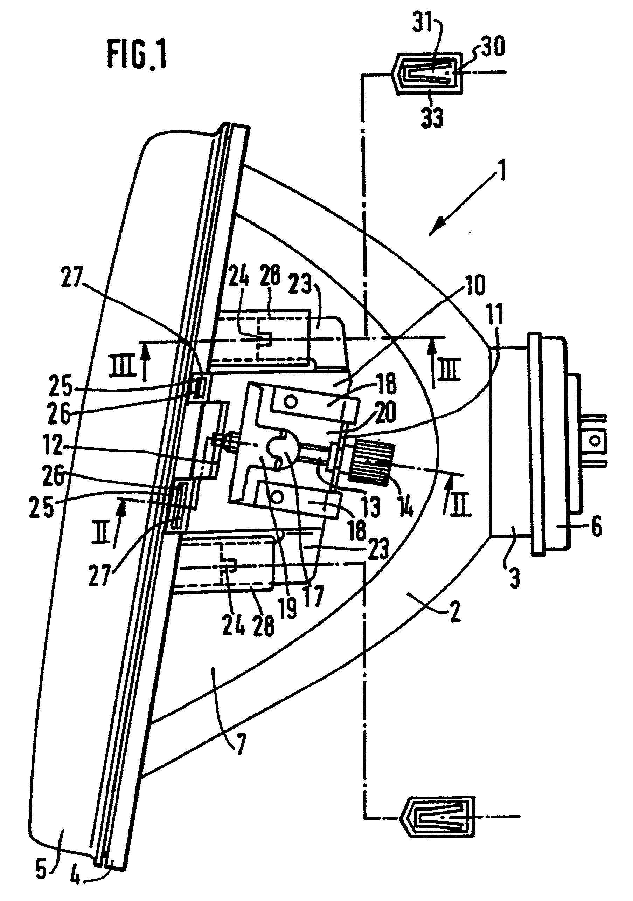

Le projecteur 1, représenté à la figure 1, comporte un réflecteur 2, obtenu par moulage de matière plastique. Le réflecteur 2 comporte une ouverture arrière 3 et une ouverture frontale 4. Une glace de fermeture 5 est fixée sur l'ouverture frontale 4 afin de constituer un espace intérieur clos du réflecteur. Une bonnette 6 est fixée sur l'ouverture arrière 3. Elle comprend des moyens de maintien et est traversée par les fiches de connexion d'une lampe à l'intérieur de l'espace intérieur clos du réflecteur 2.

Une surface plane 7 est réalisée sur le réflecteur 2 sur laquelle est prévu un système de fixation et de réglage du projecteur 1.

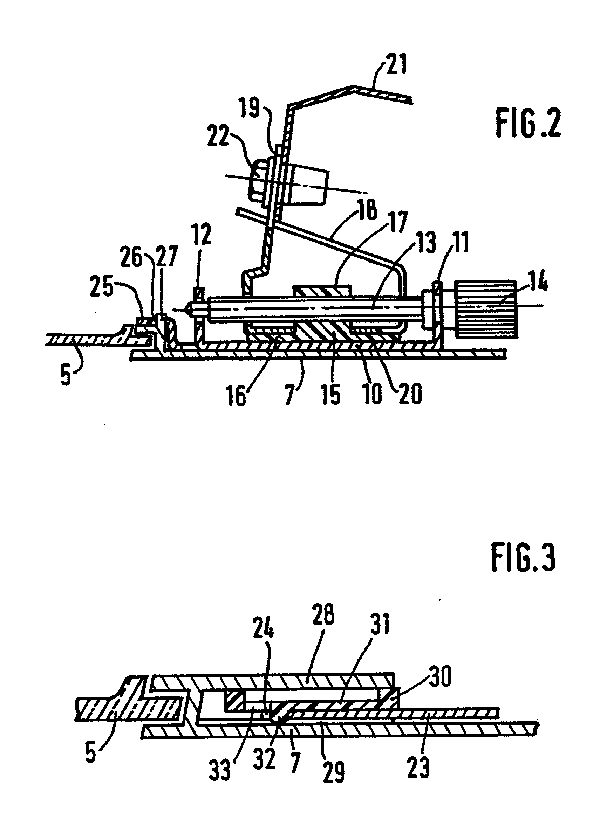

Au regard des figures 1 et 2, le système de fixation et de réglage du projecteur 1, comporte une plaque support 10, réalisée par pliage et découpe d'un flan de tôle. La plaque support 10 est munie de deux rebords opposés 11 et 12 pliés verticalement et dirigés vers le haut. Le rebord 12 est percé d'un trou permettant le passage libre de l'extrémité d'une vis de réglage 13, et l'autre rebord comporte une ouverture pour le maintien et le passage de l'autre extrémité de la vis de réglage 13 à l'extrémité de laquelle est fixée une molette de manipulation 14. Un chariot fixe 15, constitué d'un seul tenant, d'un socle 16 en contact sur la plaque support 10, et d'un écrou 17 traversé par la vis de réglage 13, dont l'action entraîne en translation la plaque support 10, d'où le dispostif lumineux 1 lors de l'opération de réglage. Deux lames ressort 18 et une fourche 19 sont obtenues par découpe d'un flan de tôle 20 en acier ressort et sont fixées sur le chariot 15.

L'ensemble ainsi constitué et solidarisé est fixé sur la partie plane 7 du réflecteur 2 du projecteur 1 par l'intermédiaire de la plaque support 10. La plaque support 10 comporte, obtenues par pliage et découpe, deux pattes d'ancrage 25, de chaque côté du rebord 12, qui présentent une partie horizontale, munie d'une lumière 26 apte à s'ancrer sur un muret 27 vertical, obtenu de moulage avec le réflecteur 2. Deux bras 23, sont également obtenus par découpe et pliage, et s'étendent parallèlement de chaque côté de la plaque support 10 vers l'avant du projecteur 1. Chacun des bras 23 est plié de manière à être situé sur un plan horizontal légèrement plus élevé que la plaque support 10, et comporte une encoche 24 à son extrémité.

Deux étriers 28 se présentant sous la forme d'un pont, sont obtenus de moulage avec le réflecteur 2 sur la partie plane 7 et comportent chacun, sur leur paroi inférieure deux rails 29, d'une épaisseur égale à la différence de hauteur entre les bras 23 et la plaque support 10.

La fixation de la plaque support 10, munie du chariot 15, de la vis de réglage 13, des lames ressort 18 et de la fourche 19, est réalisée sur la partie plane 7 du réflecteur 2 du projecteur 1 en engageant les bras 23 dans les étriers 28 tout en mettant lesdits bras 23 en contact avec la paroi supérieure des étriers 28 jusqu'à ce que les lumières 26 ménagées dans les pattes d'ancrage 25 viennent s'ancrer sur les murets 27. La plaque support 10 est alors mise en contact avec le réflecteur 2, les bras 23 reposant sur les rails 29. Deux languettes de verrouillage 30, réalisées par moulage de matière plastique et constituées chacune d'un doigt élastique 31 muni à leur extrémité d'un ergot 32, et encadré d'une partie rectangulaire 33, sont insérées dans les étriers 28 entre les bras 23 et la paroi supérieure des étriers 28 jusqu'à ce que l'ergot 32 du doigt élastique 31 se loge dans l'encoche 24, grâce à la légère surélévation des bras 23, par rapport à la paroi inférieure des étriers 28.

Il est à noter que pour le positionnement de la plaque support 10 avant sa fixation, les pattes d'ancrage 25 doivent passer au dessus des murets 27 avant de s'y ancrer. Pour ce faire, les bras 23 sont insérés dans les étriers 28 en mettant en contact lesdits bras 23 avec les parois supérieures desdits étriers 28 qui doivent être d'une hauteur sensiblement égale à l'épaisseur d'une languette de verrouillage 30 ajoutée à l'épaisseur dudit bras 23. Par conséquent la hauteur des murets 27 devra être inférieure à l'épaisseur de la languette de verrouillage 30.

La fixation du projecteur 1, sur le véhicule automobile est réalisée sur sa partie inférieure, par exemple, par un pion reposant sur un coussinet fixé sur un élément de carrosserie, permettant un débattement angulaire, et qui y est maintenu par pression. Sur sa partie supérieure, la fourche 19, enfourche une vis 22, fixée sur un élément de carrosserie 21 et sur lequel prennent appui les lames ressort 18 qui maintiennent une pression sur le projecteur 1 nécessaire à sa fixation. La vis 22 assure le positionnement initial du projecteur 1.

Le réglage du projecteur 1 se fait alors de la façon suivante ; on effectue une rotation de la vis de réglage 13 à l'aide de la mollette 14. Le chariot 15, sur lequel sont fixées les lames ressort 18 et la fourche 19, elle-même fixée à l'élément de carrosserie 21, est immobile.

La vis de réglage 13 translate alors par rapport au chariot 15, en entraînant la plaque support 10, avec laquelle elle est liée en translation. La plaque support 10 étant fixée sur le réflecteur 2 du projecteur 1, ledit projecteur 1 bascule autour de son axe de rotation par rapport à la carrosserie du véhicule, selon un débattement limité par la longueur de la vis de réglage 13.

Il est évident que la description, ne constitue qu'un exemple de réalisation, et que de nombreuses modifications pourront y être apportées sans pour autant sortir du cadre de l'invention.

## Revendications

1. Système de fixation et de réglage d'un dispositif lumineux, plus particulièrement d'un projecteur, notamment pour véhicule automobile, du type comportant un support (10) fixé au dispositif lumineux (1), et sur lequel est montée libre en rotation, une vis de réglage (13) qui entraîne ledit support en translation par rapport à un chariot fixe (15) en appui élastique contre un élément de carrosserie (21), caractérisé en ce que le support (10) est constitué d'une plaque comportant au moins une lumière (26) apte à s'engager sur un point d'ancrage correspondant (27) solidaire du dispositif lumineux (1), et en ce qu'au moins une languette de verrouillage (30) immobilise la plaque support (10) en s'insérant entre un bras (23) de la plaque support (10) et un étrier (28) du dispositif lumineux (1) dans lequel est logé ledit bras (23).

2. Système de fixation et de réglage, selon la revendication 1, caractérisé en ce que le point d'ancrage de la plaque support (10) est un muret (27) obtenu de moulage avec le dispositif lumineux (1), selon un plan sensiblement vertical.

3. Système de fixation et de réglage, selon la revendication 1, caractérisé en ce que l'étrier (28) est obtenu de matière avec le dispositif lumineux (1), et se présente sous la forme d'un pont dont la hauteur est sensiblement égale à l'épaisseur du bras (23) ajouté à l'épaisseur de la languette de verrouillage (30).

4. Dispositif lumineux et de réglage, selon les revendications 1 et 3, caractérisé en ce que la languette de verrouillage (30) comporte un doigt élastique (31) muni d'un ergot (32) apte à se loger dans une encoche (24) correspondante ménagée dans le bras (23) de la plaque support (10).

5. Système de fixation et de réglage, selon l'une quelconque des revendications précédentes, caractérisé en ce que la hauteur du muret (27) est inférieure à l'épaisseur de la languette de verrouillage (30).

6. Système de fixation et de réglage, selon l'une quelconque des revendications précédentes, caractérisé en ce que la plaque support (10) comporte deux bras (23), insérées dans deux étriers (28), et immobilisés par deux languettes de verrouillage (30).

## Patentansprüche

1. Befestigungs- und Einstellungseinrichtung einer Lichtquelle, insbesondere eines Scheinwerfers, besonders für ein Kraftfahrzeug, enthaltend eine an der Lichtquelle (1) befestigte Stütze (10), woran drehbeweglich eine Einstellschraube (13) angebracht ist, die die genannte Stütze in translatorischer Bewegung im Verhältnis zu einem feststehenden Wagen (15) unter elastischer Auflage an einem Karosserieelement (21) bewegt, **dadurch gekennzeichnet**, daß die Stütze (10) aus einer Platte besteht, die wenigstens einen Schlitz (26) enthält, der zum Eingriff mit einem entsprechenden Verankerungspunkt (27) geeignet ist, welcher fest mit der Lichtquelle (1) verbunden ist, und daß wenigstens eine Verriegelungslasche (30) die Stützplatte (10) arretiert und sich zwischen einem Arm (23) der Stützplatte (10) und einem Bügel (28) der Lichtquelle (1), worin der genannte Arm (23) untergebracht ist, einfügt.

2. Befestigungs- und Einstellungseinrichtung entsprechend Anspruch 1, **dadurch gekennzeichnet**, daß der Verankerungspunkt der Stützplatte (10) eine Wandung (27) ist, die aus einem Stück mit der Lichtquelle (1) entsprechend einer im wesentlichen vertikalen Ebene gepreßt ist.

3. Befestigungs- und Einstellungseinrichtung entsprechend Anspruch 1, **dadurch gekennzeichnet**, daß der Bügel (28) aus einem Stück mit der Lichtquelle (1) besteht und die Form einer Brücke hat, deren Höhe im wesentlichen gleich der Dicke des Arms (23) zuzüglich der Dicke der Verriegelungslasche (30) ist.

4. Lichtquelle und Einstellungseinrichtung entsprechend den Ansprüchen 1 und 3, **dadurch gekennzeichnet**, daß die Verriegelungslasche (30) einen elastischen Finger (31) aufweist, der mit einem Nocken (32) versehen ist, welcher in einen entsprechenden Einschnitt (24) im Arm (23) der Stützplatte (10) hineinpaßt.

5. Befestigungs- und Einstellungseinrichtung entsprechend einem der vorherigen Ansprüche, **dadurch gekennzeichnet**, daß die Höhe der Wandung (27) geringer ist als die Dicke der Verriegelungs lasche (30).

6. Befestigungs- und Einstellungseinrichtung entsprechend einem der vorherigen Ansprüche, **dadurch gekennzeichnet**, daß die Stützplatte (10) zwei Arme (23) aufweist, die in zwei Bügel (28) eingefügt sind und durch zwei Verriegelungslaschen (30) arretiert werden.

## Claims

1. A fastening and adjusting system for a lighting device, more particularly a headlamp, especially for a motor vehicle, of the kind comprising a support (10) secured to the lighting device (1), and on which there is mounted, freely rotatably, an adjusting screw (13) which moves the said support in translational movement with respect to a fixed carrier member (15) bearing resiliently against a bodywork element (21), characterised in that the support (10) comprises a plate having at least one through opening (26) adapted to engage on a corresponding anchor point (27), which is fixed to the lighting device (1), and in that at least one locking tongue (30) locates the support plate (10) against movement, by being interposed between an arm (23) of the support plate (10) and a stirrup (28) of the lighting device (1) in which the said arm (23) is mounted.

2. A fastening and adjusting system according to Claim 1, characterised in that the anchor point of the support plate (10) is a lug (27) formed by moulding integrally with the lighting device (1) in a substantially vertical plane.

3. A fastening and adjusting system according to Claim 1, characterised in that the stirrup (28) is formed integrally with the lighting device (1), and is in the form of a bridge, the height of which is substantially equal to the sum of the thickness of the arm (23) and the thickness of the locking tongue (30).

4. A lighting and adjusting device according to Claims 1 and 3, characterised in that the locking tongue (30) has a resilient finger (31) having a pip (32), which is arranged to engage in a corresponding slot (24) formed in the arm (23) of the support plate (10).

5. A fastening and adjusting system according to any one of the preceding Claims, characterised in that the height of the lug (27) is smaller than the thickness of the locking tab (30).

6. A fastening and adjusting system according to any one of the preceding Claims, characterised in that the support plate (10) includes two arms (23), inserted into two stirrups (28) and located against movement by two locking tongues (30).

FIG.1
31
30
33
1
27
24
28
23
10
11
III
III
25
18
26
20
12
26
25
13
14
II
II
18
6
23
27
3
19
17
24
28
2
7
5
4

21
19
22
18
17
13
11
12
26
27
25
14
5
16
7
15
10
20

FIG.3

24
28
31
30
5
33
32
7
29
23